# EUROPÄISCHE PATENTSCHRIFT

(11) **EP 3 554 920 B1**
(45) Veröffentlichungstag und Bekanntmachung des Hinweises auf die Patenterteilung: **11.05.2022**
(21) Anmeldenummer: 17818514.6
(22) Anmeldetag: 13.12.2017
(51) Int. Cl.: B62D 1/10

(54) **LENKRAD FÜR EINE KRAFTFAHRZEUGLENKUNG UND LENKSÄULE FÜR EIN KRAFTFAHRZEUG**
STEERING WHEEL FOR A MOTOR VEHICLE STEERING SYSTEM AND STEERING COLUMN FOR A MOTOR VEHICLE
VOLANT DE DIRECTION POUR UNE DIRECTION DE VÉHICULE AUTOMOBILE ET COLONNE DE DIRECTION POUR UN VÉHICULE AUTOMOBILE

(30) Priorität: 16.12.2016 DE 102016225297
(43) Veröffentlichungstag der Anmeldung: 23.10.2019
(73) Patentinhaber: thyssenkrupp Presta AG, 9492 Eschen (LI); thyssenkrupp AG, 45143 Essen (DE)
(72) Erfinder: KREUTZ, Daniel, 6800 Feldkirch (AT); FORTE, Sebastian, 9493 Mauren (LI); BAYER, Tim, 9450 Lüchingen (CH)
(74) Vertreter: thyssenkrupp Intellectual Property GmbH
(86) Internationale Anmeldenummer: PCT/EP2017/082692
(87) Internationale Veröffentlichungsnummer: WO 2018/109039

(56) Entgegenhaltungen:
- DE-A1-102006 006 995
- DE-A1-102015 207 477
- DE-C- 947 287
- DE-U1-202016 005 986
- FR-A- 984 910

## Beschreibung

### Stand der Technik

Die Erfindung betrifft ein Lenkrad für eine Kraftfahrzeuglenkung, umfassend eine Lenkradnabe, die eine Längsachse aufweist und koaxial an einer drehbar gelagerten Lenkspindel anbringbar ist, und einem an der Lenkradnabe angebrachten Lenkradkranz, der radialen Abstand zur Längsachse hat und sich quer zur Längsachse flächenhaft erstreckt, wobei der Lenkradkranz an der Lenkradnabe in einem Lager um eine quer zur Längsachse liegende Neigungsachse zwischen einer Betriebsposition und einer Verstauposition gegen die Längsachse neigbar gelagert ist, wobei der Lenkradkranz in der Verstauposition flacher gegen die Längsachse geneigt ist als in der Betriebsposition, wobei zwischen der Lenkradnabe und dem Lenkradkranz eine Drehmomenterzeugungseinrichtung angeordnet ist, von der ein Drehmoment um die Neigungsachse auf den Lenkradkranz ausübbar ist, und wobei die Lenkradnabe eine lösbare Fixiereinrichtung aufweist, welche wahlweise in mindestens eine Fixierstellung oder eine Lösestellung bringbar ist, wobei in Fixierstellung der Lenkradkranz relativ zur Lenkradnabe fixiert ist und in Lösestellung der Lenkradkranz relativ zur Lenkradnabe neigbar ist.

Lenksäulen für Kraftfahrzeuge weisen eine Lenkwelle mit einer Lenkspindel auf, an deren in Fahrtrichtung hinterem, dem Fahrer zugewandten Ende zur Einbringung von manuellen Lenkbefehlen durch den Fahrer ein Lenkrad angebracht ist. Die Lenkspindel ist in einer Trag-einheit drehbar gelagert, die mit der Fahrzeugkarosserie verbunden ist.

Das Lenkrad weist Befestigungsmittel auf, mit denen die Lenkradnabe drehfest auf dem hinteren, dem Fahrer zugewandten Ende der Lenkspindel koaxial befestigt ist, wobei die Längsachse der Lenkradnabe identisch ist mit der Achse der Lenkspindel. Die Lenkradnabe trägt den Lenkradkranz, welcher ein ring- oder ringabschnittförmiges Griffelement für den Lenkeingriff bildet. Der Lenkradkranz umgibt die Lenkradnabe durchgehend oder abschnittweise mit Abstand zur Längsachse, wobei das oder die Griffelemente in einer flächenhaften Anordnung im Wesentlichen parallel zu einer Rotationsebene angeordnet sind, die senkrecht zur Längsachse steht. Der Lenkradkranz kann in der klassischen Form mit einem reifenförmigen Griffelement rund umlaufend ausgebildet sein, zur Optimierung von Ergonomie und Design kann er eine abgeflachte, rechteckige oder unregelmäßige, über den Umfang durchgehende oder unterbrochene Form haben.

Im konventionellen, manuellen Betriebszustand wird das Lenkrad im Fahrzeuginnenraum positioniert, so dass es für einen manuellen Lenkeingriff durch den Fahrer bequem erreichbar und ergonomisch günstig bedienbar ist. Zu diesem Zweck ist es bekannt, die Lenksäule längs und in der Höhe verstellbar zu gestalten, so dass der Abstand und die Höhe des Lenkrads innerhalb eines typischen Bereichs möglicher Bedien- oder Betriebspositionen eingestellt werden können. Im automatisierten Fahrbetrieb beim autonomen Fahren erfolgt die Lenkung des Fahrzeugs automatisiert anhand von gemessenen und vorgegebenen Steuerungsparametern, welche über elektromechanische Aktuatoren den Lenkeinschlag der Räder einstellen, um einer vorgegebenen Lenktrajektorie zu folgen. Ein manueller Lenkeingriff durch den Fahrer ist nicht mehr erforderlich, und entsprechend wird angestrebt, das im Betriebszustand in den Fahrzeuginnenraum vorstehende Lenkrad in eine Verstauposition außerhalb möglicher Bedienpositionen der Betriebsstellung zu bringen, um den dadurch freiwerdenden Fahrzeuginnenraum alternativ nutzen zu können.

Aus der FR 2861657 A1 ist eine Fahrzeuglenkung bekannt, mit einer Lenkungseinheit, welches ein mit seiner Lenkradnabe an der Lenkspindel angebrachtes Lenkrad, eine Trageinheit zur drehbaren Lagerung der Lenkspindel und eine elektronische Sensorik zur Erfassung von Lenkbefehlen aufweist. Die gesamte Lenkungseinheit ist an einer Positioniervorrichtung relativ zum Fahrzeuginnenraum in Längsrichtung positionierbar, und kann an der Positioniereinrichtung als Ganzes geneigt werden. Nachteilig ist daran der aufwendige Aufbau. Außerdem kann diese Lenkung ausschließlich für reine steer-by-wire-Lenkungen eingesetzt werden, bei denen keine mechanische Verbindung der Lenkspindel mit den Rädern vorgesehen ist.

Um das Lenkrad aus dem Bedienbereich bewegen zu können, sind sogenannte "head-tilt"-Lenkungen bekannt, wie beispielsweise in der EP 2 567 878 B1 beschrieben. Dabei ist die Lenkspindel an ihrem lenkradfernen, vorderen Ende über ein Kreuzgelenk mit der Lenkwelle verbunden und um ein Kippgelenk relativ zur Karosserie neigbar gelagert. Dadurch kann die gesamte Lenkspindel samt dem daran fest angebrachten Lenkrad nach vorn geneigt werden. Nachteilig sind der aufwendige Aufbau und die eingeschränkten Möglichkeiten zur Verstauung des Lenkrads im Fahrzeuginnenraum.

Aus der FR 984 910 A ist ein Lenkrad der eingangs genannten Art bekannt. Als Drehmomenterzeugungsvorrichtung weist es eine Feder auf, welche eine federnd nachgiebige Neigung des Lenkradkranzes relativ zur Lenkradnabe beim Einwirken einer äußeren Kraft ermöglicht, und ein selbsttätiges Aufrichten in die Betriebsposition. Nachteilig ist jedoch, dass die Fixiereinrichtung auch im manuellen Fahrbetrieb bereits durch äußere Einflüsse gelöst werden kann, wodurch die Lenkbarkeit und damit die Sicherheit beeinträchtigt werden kann.

Angesichts der vorangehend erläuterten Problematik ist es eine Aufgabe der vorliegenden Erfindung, ein Lenkrad anzugeben, welches eine bessere Funktion der Fixiereinrichtung ermöglicht.

### Darstellung der Erfindung

Zur Lösung der vorgenannten Problematik wird bei einem Lenkrad für eine Kraftfahrzeuglenkung, umfassend eine Lenkradnabe, die eine Längsachse aufweist und koaxial an einer drehbar gelagerten Lenkspindel anbringbar ist, und einem an der Lenkradnabe angebrachten Lenkradkranz, der radialen Abstand zur Längsachse hat und sich quer zur Längsachse flächenhaft erstreckt, wobei der Lenkradkranz an der Lenkradnabe in einem Lager um eine quer zur Längsachse liegende Neigungsachse zwischen einer Betriebsposition und einer Verstauposition gegen die Längsachse neigbar gelagert ist, wobei der Lenkradkranz in der Verstauposition flacher gegen die Längsachse geneigt ist als in der Betriebsposition, wobei zwischen der Lenkradnabe und dem Lenkradkranz eine Drehmomenterzeugungseinrichtung angeordnet ist, von der ein Drehmoment um die Neigungsachse auf den Lenkradkranz ausübbar ist, und wobei die Lenkradnabe eine lösbare Fixiereinrichtungaufweist, welche wahlweise in mindestens eine Fixierstellung oder eine Lösestellung bringbar ist, wobei in Fixierstellung der Lenkradkranz relativ zur Lenkradnabe fixiert ist und in Lösestellung der Lenkradkranz relativ zur Lenkradnabe neigbar ist, erfindungsgemäß vorgeschlagen, dass die Fixiereinrichtung einen motorischen Aktuator aufweist zur motorischen Einstellung der Fixierstellung oder der Lösestellung.

Die Lenkradnabe weist eine lösbare Fixiereinrichtung auf, welche wahlweise in mindestens eine Fixierstellung oder eine Lösestellung bringbar ist, wobei in Fixierstellung der Lenkradkranz relativ zur Lenkradnabe fixiert ist und in Lösestellung der Lenkradkranz relativ zur Lenkradnabe neigbar ist. Die Fixiereinrichtung ermöglicht, den Lenkradkranz relativ zur Lenkradnabe festzulegen, insbesondere in der Betriebsposition, wenn beim Einbringen eines manuellen Lenkmoments ein fester Sitz des Lenkradkranzes sichergestellt werden muss, und auch in der Verstauposition, in welcher der Lenkradkranz sicher gehalten werden muss. Entsprechend ist zumindest in der Betriebsposition und der Verstauposition die Fixierstellung aktivierbar. Um einen Wechsel zwischen der Verstauposition und der Betriebsposition und umgekehrt zu ermöglichen, wird die Fixiereinrichtung gelöst, d.h. in Lösestellung gebracht. Dann kann der Lenkradkranz durch Drehung in dem Lager bis in die angestrebte Neigestellung verkippt werden, und dort wieder fixiert werden.

Erfindungsgemäß weist die Fixiereinrichtung einen motorischen Aktuator auf zur motorischen Einstellung der Fixierstellung oder der Lösestellung. Der motorische Aktuator weist bevorzugt ein elektromechanisches Betätigungselement auf, welches mit dem Fixierelement zusammenwirkt. Durch entsprechende Aktivierung des Aktuators, etwa durch die Bestromung eines elektromechanischen Aktuators, kann über das Betätigungselement eine Kraft auf das Fixierelement ausgeübt werden, so dass dieses in Fixierstellung gebracht werden kann, beispielsweise ein Formschlusselement in Formschlusseingriff mit einem Gegenelement bewegt wird, oder ein Kraftschlusselement verspannt wird. Durch entgegengesetzte Betätigung des Aktuators kann das Fixierelement in Lösestellung gebracht werden.

Die Aktivierung des Aktuators kann manuell erfolgen, beispielsweise durch einen elektrischen Schalter, der beispielsweise am Lenkradkranz angeordnet sein kann und bei Betätigung den elektromotorischen Aktuator bestromt zur Einstellung der Fixier- oder Lösestellung. Alternativ oder zusätzlich kann der Aktuator durch Steuersignale aktiviert oder deaktiviert werden, um beispielsweise den Lenkradkranz in bestimmten Fahrsituationen automatisiert in Betriebsposition freizugeben, um eine manuelle Lenkeingabe zu ermöglichen, oder auch um eine Freigabe zu verhindern, wenn ein manueller Lenkeingriff kritisch sein könnte.

Ein Aktuator kann beispielsweise realisiert werden durch einen elektromotorisch angetriebenen Spindeltrieb, der ein durch Drehung einer Spindel mit einer darauf angeordneten Spindelmutter bewegbares Betätigungselement aufweist. Ein durch einen Elektromotor drehend antreibbares Fixierelement ist ebenfalls denkbar und möglich, wie auch ein elektromagnetisch antreibbares Betätigungselement.

In einer vorteilhaften Ausführung weist die Drehmomenterzeugungseinrichtung einen Energiespeicher oder Kraftspeicher auf, beispielsweise ein Federelement. Dieses kann derart zwischen Lenkradkranz und Lenkradnabe angeordnet sein, dass es elastisch gespannt wird, wenn der Lenkradkranz in Verstauposition bewegt wird, beispielsweise durch manuelles Verkippen. Die in dieser Verstauposition in dem Federelement gespeicherte Energie kann dazu genutzt werden, den Lenkradkranz automatisiert aus der Verstauposition in die Betriebsposition zu bringen. Um eine derartige Funktionalität zu realisieren, ist es sinnvoll, dass eine Fixiereinrichtung der oben genannten Art vorgesehen ist. Dadurch kann der Lenkradkranz gegen die in Richtung auf die Betriebsposition gerichtete Federkraft in Verstauposition festzuhalten. Der Energiespeicher bildet dabei eine elastische Vorspanneinrichtung, welche den Lenkradkranz in Richtung der Betriebsposition vorspannt. Wird die Fixiereinrichtung gelöst, wird der Lenkradkranz durch die Federkraft in Betriebsposition aufgerichtet.

Erfindungsgemäß ist der Lenkradkranz bewegbar mit der Lenkradnabe verbunden, und zwar um ein scharnierartig ausgebildetes Lager verkippbar. Durch Verkippen um die durch das Lager vorgegebenen Neigungsachse kann die Neigung des Lenkradkranzes relativ zur Lenkradnabe eingestellt werden, und damit auch relativ zu einer Lenkspindel einer Fahrzeuglenkung, auf der die Lenkradnabe koaxial drehfest befestigt ist, bevorzugt an deren bezüglich der Fahrtrichtung hinteren, im Fahrzeuginnenraum dem Fahrer zugewandten Ende.

Die Neigungsachse bildet eine Querachse, welche quer zur Längsachse der Lenkradnabe oder der Lenkspindel liegt. Bezogen auf das Fahrzeug liegt die Neigungsachse horizontal quer zur Fahrtrichtung. Durch Drehung um diese Neigungsachse kann der Lenkradkranz somit im Fahrzeuginnenraum wahlweise nach vorn oder hinten geneigt oder verkippt werden. Dadurch ist es beispielsweise möglich, den Lenkradkranz aus einer Betriebsposition, in welcher er sich senkrecht zur Längsachse erstreckt und das oder die Griffelemente parallel zu einer Rotationsebene der Lenkradnabe oder der Lenkspindel liegen, in eine nach vorn geneigte Verstauposition zu klappen. In der Verstauposition ist der Lenkradkranz stärker gegen die Längsachse geneigt als in der senkrecht zur Längsachse stehenden Betriebsposition. Dadurch wird der in der Betriebs- oder Bedienposition vom Lenkradkranz eingenommene Bedienraum zur anderweitigen Nutzung freigegeben. Alternativ kann die Betriebsposition derart vorliegen, dass diese nicht exakt senkrecht zur Längsachse steht, sondern aus Komfortgründen für den Fahrer um einen Winkel, welcher kleiner ist als der Winkel, in welchem sich das Lenkrad in Verstauposition befindet, geneigt ist. Dieser Winkel kann vorzugsweise in einem Bereich zwischen 2° und 15° liegen.

Ein Vorteil der Erfindung ist, dass die Lenkradnabe und die Lenkspindel drehfest miteinander verbunden bleiben und beim erfindungsgemäßen Verstauen des Lenkradkranzes nicht gegeneinander und auch nicht im Fahrzeuginnenraum bewegt werden müssen. Das hat den Vorteil, dass die für einen Fahrer individuell eingestellte Bedienposition der Lenksäule eingestellt bleiben kann, und nur der Lenkradkranz aus dem Bedienbereich gebracht wird. Der Lenkradkranz hat verglichen mit einer Lenkungseinheit, die zusätzlich die Lenkspindel einschließlich Lagerung und Trageinheit umfasst, eine deutlich geringere Masse, und kann dadurch mit geringerem Kraftaufwand aus der Betriebsposition in die Verstauposition und wieder zurück bewegt werden. Dadurch kann mit relativ geringerem Antriebsaufwand ein schnellerer Wechsel der Positionen erfolgen, was insbesondere beim autonomen Fahren einen Sicherheitsaspekt darstellt, wenn bei einer Umschaltung vom automatischen auf manuellen Fahrbetrieb das Lenkrad schnell aus der Verstauposition in Bedienposition gebracht werden muss. Dies ist im Stand der Technik, bei dem die gesamte Lenkungseinheit oder die Lenkspindel bewegt werden müssen, nicht oder nur mit großem Aufwand, insbesondere zeitlichen Aufwand, möglich.

Ein weiterer Vorteil der Erfindung ist, dass eine platzsparende Verstauung des Lenkrads auch bei Lenksäulen möglich ist, die eine mechanisch durchgehende Lenkwelle aufweisen, welche sich an die Lenkspindel anschließt, also nicht nur bei steer-by-wire-Lenkungen. Bei diesen ist ein vorteilhafter Einsatz der Erfindung ebenfalls möglich.

Im Stand der Technik ist die Rotationsebene der Lenkradnabe, die identisch ist mit der senkrecht zur Längsachse der Lenkspindel stehenden Rotationsebene und daher als Lenkradnaben-oder Lenkspindel-Rotationsebene bezeichnet werden kann, parallel zur Lenkrad-Rotationsebene angeordnet, zu welcher der Lenkradkranz im Wesentlichen parallel liegt, oder in der oder parallel zu der das oder die Griffelemente angeordnet sind. Die Lenkrad-Rotationsebene steht unveränderbar senkrecht zur Lenkspindel, und zwar sowohl in der als Ganzes verstellbaren Lenkungseinheit gemäß der FR 2861657 A1, und auch bei "head-tilt"-Lenkungen wie aus der EP 2 567 878 B1 bekannt. Dagegen wird gemäß der Erfindung ermöglicht, durch die Neigung des Lenkradkranzes relativ zur Lenkradnabe die Lenkradkranz-Rotationsebene gegen die Lenkspindel-Rotationsebene zu verkippen, wobei der Lenkradkranz flacher gegen die Längsachse geneigt wird, also quasi gegen die Längsachse gefaltet wird. Dadurch kann die Neigung der Griffelemente des Lenkrads im Fahrzeuginnenraum relativ zur Lenkspindel eingestellt werden.

Bevorzugt kann die Neigungsachse einen radialen Abstand von der Längsachse haben, der kleiner ist als der Abstand des Lenkradkranzes zur Längsachse. Die Neigungsachse verläuft folglich innerhalb des Lenkradkranzes, und zwar in Einbaulage an der Lenkspindel einer Lenksäule im Fahrzeuginnenraum horizontal unterhalb der Längsachse der Lenksäule. Dadurch kann eine günstige Kinematik beim Verstauen realisiert werden, bei welcher der Lenkradkranz bei der Neigung nach vorn über die bezüglich der Lenkspindel feststehende Lenkradnabe geklappt werden kann, die Lenkradnabe befindet sich dann platzsparend in dem ganz oder teilweise von dem Lenkradkranz umschlossenen Innenbereich des Lenkradkranzes.

Die Fixiereinrichtung kann ein verstellbares Fixierelement aufweisen, welches sich an der Lenkradnabe abstützt und in Fixierstellung formschlüssig oder/und kraftschlüssig in Eingriff bringbar ist mit einem korrespondierenden Gegenelement am Lenkradkranz. In Fixierstellung der Fixiereinrichtung wirken das Fixierelement und das Gegenelement zusammen, so dass die Neigungsbewegung des Lenkradkranzes relativ zur Lenkradnabe festgestellt ist, die Drehung um die Neigungsachse also blockiert ist. Durch die Fixiereinrichtung kann das Fixierelement wahlweise in Fixierstellung oder in Lösestellung gebracht werden.

Das Fixierelement kann beispielsweise ein Formschlusselement aufweisen, welches aus einem Metall oder Kunststoff und als Nocken, Riegel, Klinke, Raste oder dergleichen ausgebildet sein kann, und welches zur Bildung eines bezüglich einer Drehbewegung zwischen Lenkradkranz und Lenkradnabe wirksamen Formschlusses in Eingriff mit einem korrespondierend ausgebildeten Gegenelement, beispielsweise in eine Vertiefung oder Öffnung, lösbar einsetzbar ist. Hierzu kann das Formschlusselement zwischen der Fixier- und der Lösestellung bewegbar sein. Vorteil dieser Anordnung ist, dass durch den oder die möglichen formschlüssigen Eingriffspositionen eindeutig definierte Fixierpositionen des Lenkradkranzes vorgegeben werden können, beispielsweise in Betriebsposition oder Verstauposition. Alternativ oder zusätzlich kann ein Fixierelement ein Kraft- oder Reibschlusselement aufweisen, welches die Erzeugung einer kraftschlüssigen Verbindung zwischen Lenkradkranz und Lenkradnabe ermöglicht. Beispielsweise kann das Fixierelement in dem Lager ausgebildet oder angeordnet sein, und eine Fixierung des Lagers durch eine reibschlüssige Verspannung ermöglichen, beispielsweise indem eine Lagerschale radial auf einem Lagerbolzen festgeklemmt wird.

Die Erfindung betrifft weiterhin eine Lenksäule für ein Kraftfahrzeug, umfassend eine in einer Trageinheit um eine Längsachse drehbar gelagerte Lenkspindel, an deren bezogen auf die Fahrtrichtung des Fahrzeugs hinteren Ende eine Lenkradnabe eines Lenkrads koaxial angebracht ist, wobei an der Lenkradnabe ein Lenkradkranz angebracht ist, der radialen Abstand zur Längsachse hat und sich quer zur Längsachse flächenhaft erstreckt. Derartige Anordnungen mit einer drehfest auf der Lenkspindel befestigten Lenkradnabe eines Lenkrads sind bekannt. Erfindungsgemäß ist vorgesehen, dass der Lenkradkranz an der Lenkradnabe in einem Lager um eine quer zur Längsachse liegende Neigungsachse zwischen einer Betriebsposition und einer Verstauposition gegen die Längsachse neigbar gelagert ist, wobei der Lenkradkranz in der Verstauposition flacher gegen die Längsachse geneigt ist als in der Betriebsposition, wobei zwischen der Lenkradnabe und dem Lenkradkranz eine Drehmomenterzeugungseinrichtung angeordnet ist, von der ein Drehmoment um die Neigungsachse auf den Lenkradkranz ausübbar ist, und wobei die Lenkradnabe eine lösbare Fixiereinrichtung aufweist, welche wahlweise in mindestens eine Fixierstellung oder eine Lösestellung bringbar ist, wobei in Fixierstellung der Lenkradkranz relativ zur Lenkradnabe fixiert ist und in Lösestellung der Lenkradkranz relativ zur Lenkradnabe neigbar ist. Erfindungsgemäß ist vorgesehen, dass die Fixiereinrichtung einen motorischen Aktuator aufweist zur motorischen Einstellung der Fixierstellung oder der Lösestellung.

Das Lenkrad kann die oben beschriebenen erfindungsgemäßen Merkmale und Merkmalskombinationen umfassen. In der erfindungsgemäßen Lenksäule ist das erfindungsgemäße Lenkrad mit der Lenkradnabe auf der Lenkspindel befestigt. Für eine gegebene Position des Lenkrads, die durch die Anordnung und - soweit es sich um eine höhen- und/oder längenverstellbare Lenksäule handelt - die Einstellung der Lenksäule vorgegeben werden kann, ist es möglich, den Lenkradkranz durch Neigung gegen die Längsachse nach vorn in eine Verstauposition zu bringen, oder zur Einstellung der Betriebsposition den Lenkradkranz aufzurichten, so dass dieser im Wesentlichen parallel zur Rotationsebene der Lenkradnabe liegt, also der Lenkradkranz senkrecht steht zur Längsachse der Lenkspindel.

Die Erfindung umfasst ein Verfahren zur Verstellung eines Lenkrads, welches eine Lenkradnabe umfasst, die eine Längsachse aufweist und koaxial an einer drehbar gelagerten Lenkspindel anbringbar ist, und einem an der Lenkradnabe angebrachten Lenkradkranz, der radialen Abstand zur Längsachse hat und sich quer zur Längsachse flächenhaft erstreckt, wobei der Lenkradkranz an der Lenkradnabe in einem Lager um eine quer zur Längsachse liegende Neigungsachse zwischen einer Betriebsposition und einer Verstauposition gegen die Längsachse neigbar gelagert ist, wobei der Lenkradkranz in der Verstauposition flacher gegen die Längsachse geneigt ist als in der Betriebsposition, und die Lenkradnabe eine lösbare Fixiereinrichtung aufweist, welche wahlweise in eine Fixierstellung oder eine Lösestellung bringbar ist, wobei in Fixierstellung der Lenkradkranz relativ zur Lenkradnabe fixiert ist und in Lösestellung der Lenkradkranz relativ zur Lenkradnabe neigbar ist, wobei zwischen der Lenkradnabe und dem Lenkradkranz eine Drehmomenterzeugungseinrichtung angeordnet ist, von der ein Drehmoment um die Neigungsachse auf den Lenkradkranz ausübbar ist.

Das Verfahren umfasst die Schritte:
- Fixiereinrichtung motorisch in Lösestellung bringen,
- Ausüben eines Drehmoments von der Drehmomenterzeugungseinrichtung um die Neigungsachse auf den Lenkradkranz, um den Lenkradkranz relativ zur Lenkradnabe um die Neigungsachse aufzurichten,
- Fixiereinrichtung motorisch in Fixierstellung bringen.

Im ersten Schritt wird die Fixiereinrichtung gelöst. Dies kann beispielsweise in der Betriebsposition erfolgen, beispielsweise durch Betätigen eines elektromotorischen Aktuators, der ein Fixierelement wie oben beschrieben von einem Gegenelement löst. Dadurch wird eine Drehbewegung des Lenkradkranzes um die Neigungsachse relativ zur Lenkradnabe freigegeben. Der Lenkradkranz kann nun in dem Lager um die Neigungsachse verkippt werden, so dass der Lenkradkranz aus der senkrechten Betriebsstellung in die relativ zur Lenkspindel flacher geneigte Verstauposition bewegt wird. Sobald die Verstauposition erreicht ist, wird die Fixiereinrichtung in Fixierstellung gebracht. Dadurch wird der Lenkradkranz in Verstauposition arretiert.

Um das Lenkrad in Bedien- oder Betriebsposition zu bringen, werden die vorgenannten Schritte ausgehend von der Verstauposition aus durchgeführt. Nach dem Lösen der Fixiereinrichtung wird der Lenkradkranz wiederum um die Neigungsachse geneigt, dieses Mal allerdings um den Lenkradkranz gegenüber der Lenkspindel so weit aufzurichten, bis die Betriebsposition erreicht wird, in welcher der Lenkradkranz senkrecht zur Längsachse steht. In der Betriebsposition wird der Lenkradkranz relativ zur Lenkradnabe durch Feststellen der Fixiereinrichtung arretiert und ist zur Durchführung manueller Lenkeingriffe sicher fixiert.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung eines steer-by-wire-Lenksystems,
- Figur 2: ein erfindungsgemäßes Lenkrad in einer schematischen Seitenansicht in Betriebsposition in Fixierstellung,
- Figur 3: ein erfindungsgemäßes Lenkrad in einer Ansicht wie in Figur 2 in Betriebsposition in Lösestellung,
- Figur 4: ein erfindungsgemäßes Lenkrad in einer Ansicht wie in Figur 1 in Verstauposition in Fixierstellung,
- Figur 5: ein erfindungsgemäßes Lenkrad in einer Ansicht wie in Figur 4 in Verstauposition in Lösestellung,
- Figur 6: eine perspektivische, schematisch auseinander gezogene Darstellung eines Lenkrads gemäß Figuren 2 bis 5.

### Ausführungsformen der Erfindung

In den verschiedenen Figuren sind gleiche Teile stets mit den gleichen Bezugszeichen versehen und werden daher in der Regel auch jeweils nur einmal benannt oder erwähnt.

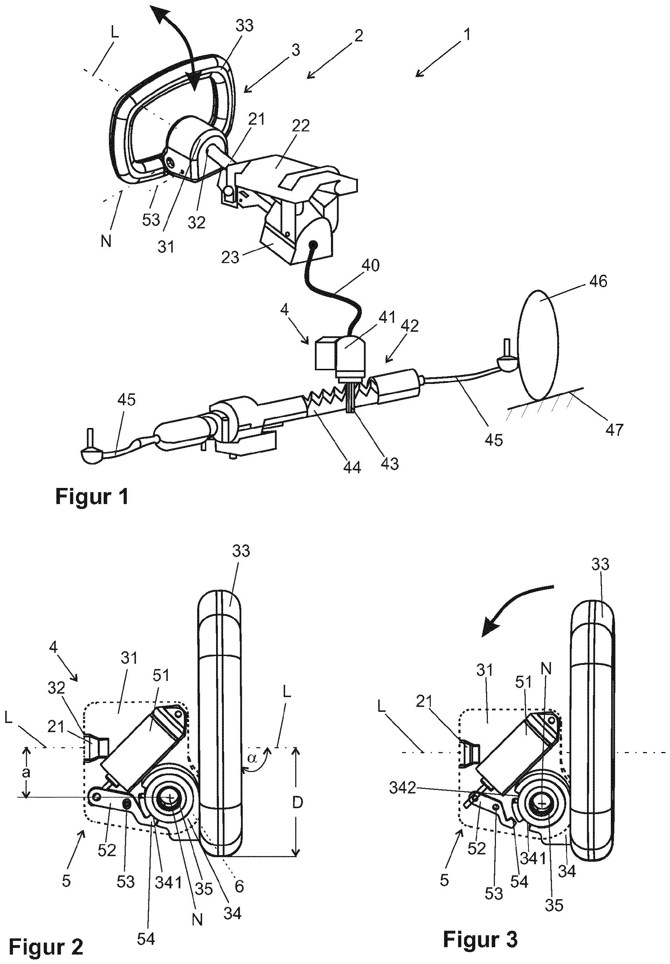

Figur 1 zeigt schematisch ein Lenksystem 1, konkret ein steer-by-wire-Lenksystem für ein Kraftfahrzeug, welches eine Lenksäule 2 als manuelle Eingabeeinrichtung aufweist. Die Lenksäule 2 weist eine Lenkspindel 21 auf, welche um ihre Längsachse L drehbar gelagert in einer Trageinheit 22 gehalten wird, die mit einer nicht dargestellten Fahrzeugkarosserie verbindbar ist.

Auf dem bezüglich der Fahrtrichtung hinteren, dem Fahrer zugewandten Ende ist an der Lenkspindel 21 ein Lenkrad 3 drehfest bezüglich einer Drehung um die Längsachse L befestigt. Dieses lenkradseitige Ende weist in der Darstellung von Figur 1 oben links schräg nach hinten.

Die Drehbewegung der Lenkspindel 21 wird von einer elektrischen Steuereinheit 23 erfasst, welche über eine elektrische Leitung 40 einen elektrischen Stellmotor 41 eines elektrischen Lenkungsantriebs 4 ansteuert. Der elektrische Stellmotor 41 leitet ein Lenkungs-Stellmoment in ein Lenkgetriebe 42 ein, welches dort über ein Ritzel 43 und eine Zahnstange 44 in eine Translationsbewegung von Spurstangen 45 umgesetzt, wodurch ein Lenkeinschlag der gelenkten Räder 46 auf einer Fahrbahn 47 bewirkt wird.

Figuren 2, 3, 4 und 5 zeigen das Lenkrad 3 in einer Seitenansicht quer zur Längsachse L in unterschiedlichen Betriebszuständen, die weiter unten noch erläutert werden. Das lenkradseitige, hintere Ende der Lenksäule 1 weist in dieser Darstellung nach rechts.

Das Lenkrad 3 weist eine Lenkradnabe 31 auf, welche schematisch transparent dargestellt ist, um einen Blick auf im Inneren liegende Teile freizugeben. Die Lenkradnabe 31 weist eine Befestigungsöffnung 32 auf, welche koaxial zur Längsachse L ausgerichtet ist und in der das lenkradseitige Ende der Lenkspindel 21 fest anbringbar ist. Dadurch sind die Lenkradnabe 31 und die Lenkspindel 21 in dem in Figur 1 dargestellten zusammengebauten Zustand fest, insbesondere drehfest miteinander verbunden. Vorzugsweise ist in der Lenkradnabe 31 ein Airbag integriert. An der Lenkradnabe 31 können weitere Bedien- und/oder Komfortelemente, wie beispielsweise eine Fahrzeughupe, eine Blinkvorrichtung oder eine Betätigungsvorrichtung für die Fahrzeugbeleuchtung vorgesehen sein.

An der Lenkradnabe 31 ist ein Lenkradkranz 33 angebracht. Der Lenkradkranz 33 hat die Form eines flachen, ringförmig umlaufenden Griffelements, welches in der dargestellten Ausführung als gerundetes Rechteck geformt ist und flächenhaft in einer Ebene, der Lenkradkranz-Rotationsebene ausgedehnt ist. Der Lenkradkranz 33 ist dadurch um eine Neigungsachse N, dass er eine Lagerhülse 34 aufweist, die um die besagte Neigungsachse N drehbar auf einem fest in der Lenkradnabe 31 angebrachten Lagerbolzen 35 gelagert ist. Dadurch wird eine Neigungsbewegung des Lenkradkranzes 33 relativ zur Lenkradnabe 31 ermöglicht, wie in Figur 1 mit dem Doppelpfeil angedeutet. Beim Neigen wird die Lenkradkranz-Rotationsebene aus der Betriebsposition, in der sie parallel zur Lenkradnaben- oder Lenkspindel-Rotationsebene liegt, gegenüber dieser geneigt.

Die Neigungsachse N steht senkrecht oder nahezu senkrecht zur Längsachse L, und hat einen Abstand a zur Längsachse L. Der Abstand a ist kleiner als der Abstand D des Lenkradkranzes 33 zur Längsachse L, damit ist der radiale Abstand D des äußeren Umfangs des Lenkradkranzes 33 von der Längsachse L gemeint, wie in Figur 2 dargestellt. Entsprechend verläuft die Neigungsachse N innerhalb des Lenkradkranzes 33. Bezogen auf die Einbaulage im Fahrzeug liegt die Neigungsachse N unterhalb der Längsachse L waagerecht, verläuft also parallel zur Längserstreckung der Zahnstange 44.

Das Lenkrad 3 weist eine Fixiereinrichtung 5 auf, mit einem motorischen Aktuator 51, der beispielsweise als elektromotorisch angetriebener Spindeltrieb ausgebildet ist, und der sich in der Lenkradnabe 31 abstützt. Der Aktuator 51 wirkt auf ein als Schwenkhebel ausgebildetes Fixierelement 52, welches von dem Aktuator 51 angetrieben um eine Schwenkachse 53 verschwenkbar ist und an seinem freien Ende ein als Nocken 54 ausgebildetes Formschlusselement aufweist.

Die Lagerhülse 34 des Lenkradkranzes 33 weist Vertiefungen 341 und 342 auf, die in deren Außenumfang eingebracht sind, und in die der Nocken 54 des Fixierelements 52 formschlüssig eingreifen kann. Bevorzugt weisen die Vertiefungen 341,342 eine Gleitschicht oder einen Dämpfer auf, um die Bewegung des Nockens 54 abzufedern. Es ist auch denkbar und möglich, dass der Nocken 54 ein Dämpfungselement aufweist oder eine Dämpfungsschicht ausgebildet ist, um durch die Dämpfung von harten Anschlägen die Lebensdauer der Fixiereinrichtung zu verlängern.

Figur 2 zeigt das Lenkrad 3 in Betriebsposition, auch als Bedienposition bezeichnet, in der der Lenkradkranz 33 mit seiner flächenhaften Ausdehnung senkrecht zur Längsachse L steht. Der Winkel α (alpha) zwischen dem Lenkradkranz 33 und der Längsachse L beträgt entsprechend 90°. Aus Komfortgründen kann der Neigungswinkel α des Lenkradkranzes 33 bezogen auf die Längsachse L kleiner als 90° ausgebildet sein, beispielsweise in einem Bereich zwischen 75° und 89,5° liegen, oder aber grösser als 90° sein, beispielsweise in einem Bereich zwischen 90,5° und 100° liegen. In Figur 2 befindet sich der Aktuator 51 in Fixierstellung, wobei der Nocken 54 formschlüssig in die Vertiefung 341 eingreift. Dadurch ist die Lagerhülse 34, und damit der Lenkradkranz 33 bezüglich einer Drehung um die Neigungsachse N mit der Lenkradnabe 31 fixiert und somit in Betriebsposition arretiert.

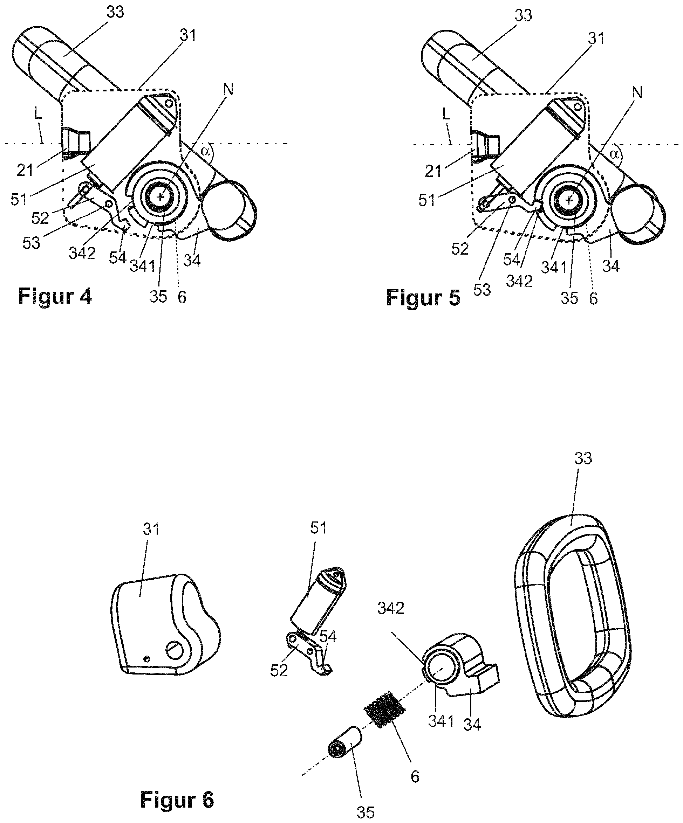

In Figur 3 befindet sich der Aktuator 51 in Lösestellung, in welcher der Nocken 54 aus der Vertiefung 341 entfernt ist. Dadurch kann der Lenkradkranz 33 bezüglich der Neigungsachse N gedreht und nach vorn gegen die Längsachse L geneigt werden, wie mit dem Pfeil angedeutet. Dadurch wird der Lenkradkranz 33 in die Verstauposition bewegt, wie in Figuren 4 und 5 dargestellt. Darin ist der Lenkradkranz 33 auf seiner zum Lager 35 gegenüberliegenden Seite flacher gegen die Längsachse L geneigt als in der Betriebsposition, also in einem flachen Winkel α (alpha) kleiner als 90°. Dadurch wird der Lenkradkranz 33 mit seiner zum Lager 34,35 gegenüber liegenden Seite also quasi gegen die Längsachse L gefaltet.

Figur 4 zeigt die Situation vor dem Erreichen der endgültigen Verstauposition, wobei der Aktuator 51 sich zunächst noch in Löseposition befindet und der Nocken 54 nicht formschlüssig mit der Lagerhülse 34 verbunden ist. Beim Erreichen der Verstauposition wird der Aktuator 51 betätigt, so dass das Fixierelement 52 in Fixierposition bewegt wird. Nach dem Erreichen der Fixierposition wird der Nocken 54 in formschlüssigen Eingriff mit der zweiten Vertiefung 342 gebracht. Dadurch ist der Lenkradkranz 33 bezüglich einer Drehung um die Neigungsachse N mit der Lenkradnabe 31 fixiert und somit in Verstauposition arretiert.

Die Figuren 2 bis 5 zeigen die Phasen eines erfindungsgemäßen Verfahrens zur Verstellung des Lenkrads 3, bei dem das Fixierelement 52 der Fixiereinrichtung 5 in Betriebsposition des Lenkradkranzes 33 durch den Aktuator 51 in Lösestellung gebracht wird (Figur 3), der Lenkradkranz 33 relativ zur Lenkradnabe 31 um die Neigungsachse N geneigt wird (Figur 4) und in die Verstauposition verkippt wird, und anschließend in Verstauposition das Fixierelement 52 der Fixiereinrichtung durch den Aktuator 51 in Fixierstellung gebracht wird (Figur 5), in welcher es den Lenkradkranz 33 formschlüssig arretiert.

Um den Lenkradkranz 33 aus der Verstauposition in Betriebsposition zu bringen, wird in umgekehrter Reihenfolge verfahren.

Die einzelnen Funktionselemente des Lenkrads 3 sind in der Explosionsdarstellung gemäß Figur 6 in auseinander gezogenem Zustand gezeigt.

Der Lenkradkranz 33 kann manuell zwischen der Betriebsposition und der Verstauposition bewegt werden. Es ist zwischen der Lenkradnabe 31 und dem Lenkradkranz 33 auch eine Drehmomenterzeugungseinrichtung vorgesehen, die mit einem Federelement 6 versehen sein kann. Das Federelement 6 ist koaxial auf dem Lagerbolzen 35 angeordnet, dass es in der in Figur 4 und 5 dargestellten Verstauposition gegen den Lenkradkranz 33 vorgespannt ist und durch die Federkraft an der Lenkradnabe 31 abgestützt ein Drehmoment um die Neigungsachse N auf den Lenkradkranz 33 ausübt. Durch die Federkraft wird der Lenkradkranz 33 beim Lösen des Fixierelements 52 in die Betriebsposition gemäß Figur 3 bewegt, d.h. entgegen der Neigung in Verstauposition gegen die Längsachse L aufgerichtet.

Gegen die Federkraft des Federelements 6 kann der Lenkradkranz 33 im autonomen Fahrbetrieb manuell in die Verstauposition geneigt und verstaut werden. Dabei dient das Federelement 6 als Energiespeicher, wobei die gespeicherte Federenergie wie vorangehend beschrieben bei Bedarf das Drehmoment zum Aufrichten des Lenkradkranzes 33 zur Verfügung stellt. Das Federelement 6 kann beispielsweise als Schraubenfeder ausgebildet sein, wie in Figur 6 dargestellt, welche auf dem Lagerbolzen 35 angeordnet ist und die Lagerhülse 34 in Umfangsrichtung elastisch vorspannt. In den Figuren 2 bis 5 ist die Sicht auf das Federelement 6 durch die Lagerhülse 34 verdeckt.

In Figuren 4 und 5 ist deutlich erkennbar, wie sich in Verstauposition die Lenkradnabe 31 platzsparend innerhalb der Lenkradkranzes 33 befindet.

Auch wenn hier im Beispiel eine Steer-by-Wire-Lenkung dargestellt ist, kann die Erfindung bevorzugt auch für Kraftfahrzeuge mit einer elektromechanischen Servolenkung angewendet werden.

### Bezugszeichenliste

- 1: Lenksystem
- 2: Lenksäule
- 21: Lenkspindel
- 22: Trageinheit
- 23: Steuereinheit
- 3: Lenkrad
- 31: Lenkradnabe
- 32: Befestigungsöffnung
- 33: Lenkradkranz
- 34: Lagerhülse
- 341: Vertiefung
- 342: Vertiefung
- 35: Lagerbolzen
- 4: Lenkungsantrieb
- 40: Leitung
- 41: Stellmotor
- 42: Lenkgetriebe
- 43: Ritzel
- 44: Zahnstange
- 45: Spurstange
- 46: Rad
- 47: Fahrbahn
- 5: Fixiereinrichtung
- 51: Aktuator
- 52: Fixierelement
- 53: Schwenkachse
- 54: Nocken
- 6: Federelement
- L: Längsachse
- N: Neigungsachse
- a: Abstand
- D: Abstand

α(alpha)Winkel

## Patentansprüche

1. Lenkrad (3) für eine Kraftfahrzeuglenkung, umfassend eine Lenkradnabe (31), die eine Längsachse (L) aufweist und koaxial an einer drehbar gelagerten Lenkspindel (21) anbringbar ist, und einem an der Lenkradnabe (31) angebrachten Lenkradkranz (33), der radialen Abstand (D) zur Längsachse (L) hat und sich quer zur Längsachse (L) flächenhaft erstreckt, wobei der Lenkradkranz (33) an der Lenkradnabe (31) in einem Lager (34, 35) um eine quer zur Längsachse (L) liegende Neigungsachse (N) zwischen einer Betriebsposition und einer Verstauposition gegen die Längsachse (L) neigbar gelagert ist, wobei der Lenkradkranz (33) in der Verstauposition flacher gegen die Längsachse (L) geneigt ist als in der Betriebsposition, wobei zwischen der Lenkradnabe (31) und dem Lenkradkranz (33) eine Drehmomenterzeugungseinrichtung (6) angeordnet ist, von der ein Drehmoment um die Neigungsachse (N) auf den Lenkradkranz (33) ausübbar ist, und wobei die Lenkradnabe (31) eine lösbare Fixiereinrichtung (5) aufweist, welche wahlweise in mindestens eine Fixierstellung oder eine Lösestellung bringbar ist, wobei in Fixierstellung der Lenkradkranz (33) relativ zur Lenkradnabe (31) fixiert ist und in Lösestellung der Lenkradkranz (33) relativ zur Lenkradnabe (31) neigbar ist, **dadurch gekennzeichnet, dass** die Fixiereinrichtung (5) einen motorischen Aktuator (51) aufweist zur motorischen Einstellung der Fixierstellung oder der Lösestellung.

2. Lenkrad nach Anspruch 1, **dadurch gekennzeichnet, dass** die Neigungsachse (N) einen radialen Abstand (a) von der Längsachse (L) hat, der kleiner ist als der Abstand (D) des Lenkradkranzes (33) zur Längsachse (L).

3. Lenkrad nach Anspruch 3, **dadurch gekennzeichnet, dass** die Fixiereinrichtung (5) ein verstellbares Fixierelement (54) aufweist, welches sich an der Lenkradnabe (31) abstützt und in Fixierstellung formschlüssig oder/und kraftschlüssig in Eingriff bringbar ist mit einem korrespondierenden Gegenelement (341, 342) am Lenkradkranz (33).

4. Lenkrad nach Anspruch 1, **dadurch gekennzeichnet, dass** die Drehmomenterzeugungseinrichtung (6) einen Energiespeicher aufweist.

5. Lenksäule (2) für ein Kraftfahrzeug, umfassend eine in einer Trageinheit (22) um eine Längsachse (L) drehbar gelagerte Lenkspindel (21), an deren bezogen auf die Fahrtrichtung des Fahrzeugs hinterem Ende eine Lenkradnabe (31) eines Lenkrads (3) koaxial angebracht ist, wobei an der Lenkradnabe (31) ein Lenkradkranz (33) angebracht ist, der radialen Abstand (D) zur Längsachse (L) hat und sich quer zur Längsachse (L) flächenhaft erstreckt, wobei der Lenkradkranz (33) an der Lenkradnabe (31) in einem Lager (34, 35) um eine quer zur Längsachse (L) liegende Neigungsachse (N) zwischen einer Betriebsposition und einer Verstauposition gegen die Längsachse (L) neigbar gelagert ist, wobei der Lenkradkranz (33) in der Verstauposition flacher gegen die Längsachse (L) geneigt ist als in der Betriebsposition, wobei zwischen der Lenkradnabe (31) und dem Lenkradkranz (33) eine Drehmomenterzeugungseinrichtung (6) angeordnet ist, von der ein Drehmoment um die Neigungsachse (N) auf den Lenkradkranz (33) ausübbar ist, und wobei die Lenkradnabe (31) eine lösbare Fixiereinrichtung (5) aufweist, welche wahlweise in mindestens eine Fixierstellung oder eine Lösestellung bringbar ist, wobei in Fixierstellung der Lenkradkranz (33) relativ zur Lenkradnabe (31) fixiert ist und in Lösestellung der Lenkradkranz (33) relativ zur Lenkradnabe (31) neigbar ist, **dadurch gekennzeichnet, dass** die Fixiereinrichtung (5) einen motorischen Aktuator (51) aufweist zur motorischen Einstellung der Fixierstellung oder der Lösestellung.

6. Verfahren zur Verstellung eines Lenkrads (3), welches eine Lenkradnabe (31) umfasst, die eine Längsachse (L) aufweist und koaxial an einer drehbar gelagerten Lenkspindel (21) anbringbar ist, und einem an der Lenkradnabe (31) angebrachten Lenkradkranz (33), der radialen Abstand (D) zur Längsachse (L) hat und sich quer zur Längsachse (L) flächenhaft erstreckt, wobei der Lenkradkranz (33) an der Lenkradnabe (31) in einem Lager (34, 35) um eine quer zur Längsachse (L) liegende Neigungsachse (N) zwischen einer Betriebsposition und einer Verstauposition gegen die Längsachse (L) neigbar gelagert ist, wobei der Lenkradkranz (33) in der Verstauposition flacher gegen die Längsachse (L) geneigt ist als in der Betriebsposition, und die Lenkradnabe (31) eine lösbare Fixiereinrichtung (5) aufweist, welche wahlweise in eine Fixierstellung oder eine Lösestellung bringbar ist, wobei in Fixierstellung der Lenkradkranz (33) relativ zur Lenkradnabe (31) fixiert ist und in Lösestellung der Lenkradkranz (33) relativ zur Lenkradnabe (31) neigbar ist, wobei zwischen der Lenkradnabe (31) und dem Lenkradkranz (33) eine Drehmomenterzeugungseinrichtung (6) angeordnet ist, von der ein Drehmoment um die Neigungsachse (N) auf den Lenkradkranz (33) ausübbar ist, umfassend die Schritte:
- Fixiereinrichtung (5) motorisch in Lösestellung bringen,
- Ausüben eines Drehmoments von der Drehmomenterzeugungseinrichtung (6) um die Neigungsachse (N) auf den Lenkradkranz (33), um den Lenkradkranz (33) relativ zur Lenkradnabe (31) um die Neigungsachse (N) aufzurichten,
- Fixiereinrichtung (5) motorisch in Fixierstellung bringen.

## Claims

1. A steering wheel (3) for a motor vehicle steering system, comprising a steering wheel hub (31) which has a longitudinal axis (L) and can be attached coaxially on a rotatably mounted steering spindle (21), and a steering wheel rim (33) which is attached on the steering wheel hub (31), is at a radial spacing (D) from the longitudinal axis (L), and extends in a planar manner transversely with respect to the longitudinal axis (L), wherein the steering wheel rim (33) is mounted on the steering wheel hub (31) in a bearing (34, 35) such that it can be inclined with respect to the longitudinal axis (L) between an operating position and a stowed position about an inclination axis (N) which lies transversely with respect to the longitudinal axis (L), the steering wheel rim (33) being inclined at a flatter angle with respect to the longitudinal axis (L) in the stowed position than in the operating position, wherein a torque generating device (6) is arranged between the steering wheel hub (31) and the steering wheel rim (33), by which torque generating device (6) a torque can be exerted on the steering wheel rim (33) about the inclination axis (N), and wherein the steering wheel hub (31) has a releasable fixing device (5) which can be moved selectively into at least one fixing position or one release position, the steering wheel rim (33) being fixed relative to the steering wheel hub (31) in a fixing position, and it being possible for the steering wheel rim (33) to be inclined relative to the steering wheel hub (31) in the release position, **characterized in that** the fixing device (5) has a motorized actuator (51) for setting the fixing position or the release position in a motorized manner.

2. The steering wheel as claimed in claim 1, **characterized in that** the inclination axis (N) is at a radial spacing (a) from the longitudinal axis (L), which radial spacing (a) is smaller than the spacing (D) of the steering wheel rim (33) from the longitudinal axis (L).

3. The steering wheel as claimed in claim 3, **characterized in that** the fixing device (5) has an adjustable fixing element (54) which is supported on the steering wheel hub (31) and, in the fixing position, can be brought into engagement in a positively locking and/or non-positive manner with a corresponding counter-element (341, 342) on the steering wheel rim (33).

4. The steering wheel as claimed in claim 6, **characterized in that** the torque generating device (6) has an energy store.

5. A steering column (2) for a motor vehicle, comprising a steering spindle (21) which is mounted in a supporting unit (22) such that it can be rotated about a longitudinal axis (L), on the rear end (in relation to the driving direction of the vehicle) of which steering spindle (21) a steering wheel hub (31) of a steering wheel (3) is attached coaxially, a steering wheel rim (33) being attached on the steering wheel hub (31), which steering wheel rim (33) is at a radial spacing (D) from the longitudinal axis (L) and extends in a planar manner transversely with respect to the longitudinal axis (L),
wherein the steering wheel rim (33) is mounted on the steering wheel hub (31) in a bearing (34, 35) such that it can be inclined with respect to the longitudinal axis (L) between an operating position and a stowed position about an inclination axis (N) which lies transversely with respect to the longitudinal axis (L), the steering wheel rim (33) being inclined at a flatter angle with respect to the longitudinal axis (L) in the stowed position than in the operating position, wherein a torque generating device (6) is arranged between the steering wheel hub (31) and the steering wheel rim (33), by which torque generating device (6) a torque can be exerted on the steering wheel rim (33) about the inclination axis (N), and wherein the steering wheel hub (31) has a releasable fixing device (5) which can be moved selectively into at least one fixing position or one release position, the steering wheel rim (33) being fixed relative to the steering wheel hub (31) in a fixing position, and it being possible for the steering wheel rim (33) to be inclined relative to the steering wheel hub (31) in the release position, **characterized in that** the fixing device (5) has a motorized actuator (51) for setting the fixing position or the release position in a motorized manner.

6. A method for adjusting a steering wheel (3) which comprises a steering wheel hub (31) which has a longitudinal axis (L) and can be attached coaxially on a rotatably mounted steering spindle (21), and a steering wheel rim (33) which is attached on the steering wheel hub (31), is at a radial spacing (D) from the longitudinal axis (L), and extends in a planar manner transversely with respect to the longitudinal axis (L), the steering wheel rim (33) being mounted on the steering wheel hub (31) in a bearing (34, 35) such that it can be inclined with respect to the longitudinal axis (L) between an operating position and a stowed position about an inclination axis (N) which lies transversely with respect to the longitudinal axis (L), the steering wheel rim (33) being inclined at a flatter angle with respect to the longitudinal axis (L) in the stowed position than in the operating position, and the steering wheel hub (31) having a releasable fixing device (5) which can be moved selectively into a fixing position or a release position, the steering wheel rim (33) being fixed relative to the steering wheel hub (31) in the fixing position, and it being possible for the steering wheel rim (33) to be inclined relative to the steering wheel hub (31) in the release position, wherein a torque generating device (6) is arranged between the steering wheel hub (31) and the steering wheel rim (33), by which torque generating device (6) a torque can be exerted on the steering wheel rim (33), comprising the steps:
- moving the fixing device (5) in a motorized manner into the release position,
- exerting a torque on the steering wheel rim (33) about the inclination axis (N) by the torque generating device (6), in order to incline the steering wheel rim (33) relative to the steering wheel hub (31) about the inclination axis (N),
- moving the fixing device (5) in a motorized manner into the fixing position.

## Revendications

1. Volant de direction (3) pour une direction de véhicule automobile, comprenant un moyeu de volant de direction (31), qui présente un axe longitudinal (L) et qui peut être disposé coaxialement sur un arbre de direction (21) monté de manière rotative, et une couronne de volant de direction (33) disposée sur le moyeu de volant de direction (31), qui a une distance radiale (D) par rapport à l'axe longitudinal (L) et qui s'étend à plat transversalement à l'axe longitudinal (L), la couronne de volant de direction (33) étant montée sur le moyeu de volant de direction (31) dans un palier (34, 35) de manière à pouvoir être inclinée par rapport à l'axe longitudinal (L) autour d'un axe d'inclinaison (N) situé transversalement à l'axe longitudinal (L) entre une position de service et une position de rangement, la couronne de volant de direction (33) étant inclinée plus à plat par rapport à l'axe longitudinal (L) dans la position de rangement que dans la position de service, un dispositif de génération de couple de rotation (6) étant agencé entre le moyeu de volant de direction (31) et la couronne de volant de direction (33), par lequel un couple de rotation peut être exercé autour de l'axe d'inclinaison (N) sur la couronne de volant de direction (33), et le moyeu de volant de direction (31) présentant un dispositif de fixation amovible (5), qui peut être amené au choix dans au moins une position de fixation ou une position de libération, la couronne de volant de direction (33) étant fixée par rapport au moyeu de volant de direction (31) dans la position de fixation et la couronne de volant de direction (33) pouvant être inclinée par rapport au moyeu de volant de direction (31) dans la position de libération, **caractérisé en ce que** le dispositif de fixation (5) présente un actionneur motorisé (51) pour l'ajustement motorisé de la position de fixation ou de la position de libération.

2. Volant de direction selon la revendication 1, **caractérisé en ce que** l'axe d'inclinaison (N) a une distance radiale (a) de l'axe longitudinal (L) qui est inférieure à la distance (D) de la couronne de volant de direction (33) par rapport à l'axe longitudinal (L).

3. Volant de direction selon la revendication 3, **caractérisé en ce que** le dispositif de fixation (5) présente un élément de fixation réglable (54), qui s'appuie sur le moyeu de volant de direction (31) et qui, dans la position de fixation, peut être mis en prise par complémentarité de forme ou/et par force avec un contreélément correspondant (341, 342) sur la couronne de volant de direction (33).

4. Volant de direction selon la revendication 1, **caractérisé en ce que** le dispositif de génération de couple de rotation (6) présente un accumulateur d'énergie.

5. Colonne de direction (2) pour un véhicule automobile, comprenant un arbre de direction (21) monté de manière rotative autour d'un axe longitudinal (L) dans une unité de support (22), à l'extrémité arrière duquel, par rapport au sens de marche du véhicule, est disposé coaxialement un moyeu de volant de direction (31) d'un volant de direction (3), une couronne de volant de direction (33) étant disposée sur le moyeu de volant de direction (31), qui a une distance radiale (D) par rapport à l'axe longitudinal (L) et qui s'étend à plat transversalement à l'axe longitudinal (L), la couronne de volant de direction (33) étant montée sur le moyeu de volant de direction (31) dans un palier (34, 35) de manière à pouvoir être inclinée par rapport à l'axe longitudinal (L) autour d'un axe d'inclinaison (N) situé transversalement à l'axe longitudinal (L) entre une position de service et une position de rangement, la couronne de volant de direction (33) étant inclinée plus à plat par rapport à l'axe longitudinal (L) dans la position de rangement que dans la position de service, un dispositif de génération de couple de rotation (6) étant agencé entre le moyeu de volant de direction (31) et la couronne de volant de direction (33), par lequel un couple de rotation peut être exercé autour de l'axe d'inclinaison (N) sur la couronne de volant de direction (33), et le moyeu de volant de direction (31) présentant un dispositif de fixation amovible (5), qui peut être amené au choix dans au moins une position de fixation ou une position de libération, la couronne de volant de direction (33) étant fixée par rapport au moyeu de volant de direction (31) dans la position de fixation et la couronne de volant de direction (33) pouvant être inclinée par rapport au moyeu de volant de direction (31) dans la position de libération, **caractérisé en ce que** le dispositif de fixation (5) présente un actionneur motorisé (51) pour l'ajustement motorisé de la position de fixation ou de la position de libération.

6. Procédé de réglage d'un volant de direction (3), qui comprend un moyeu de volant de direction (31), qui présente un axe longitudinal (L) et qui peut être disposé coaxialement sur un arbre de direction (21) monté de manière rotative, et une couronne de volant de direction (33) disposée sur le moyeu de volant de direction (31), qui a une distance radiale (D) par rapport à l'axe longitudinal (L) et s'étend à plat transversalement à l'axe longitudinal (L), la couronne de volant de direction (33) étant montée sur le moyeu de volant de direction (31) dans un palier (34, 35) de manière à pouvoir être inclinée par rapport à l'axe longitudinal (L) autour d'un axe d'inclinaison (N) situé transversalement à l'axe longitudinal (L) entre une position de service et une position de rangement, la couronne de volant de direction (33) étant inclinée plus à plat par rapport à l'axe longitudinal (L) dans la position de rangement que dans la position de service, et le moyeu de volant de direction (31) présentant un dispositif de fixation amovible (5), qui peut être amené au choix dans une position de fixation ou dans une position de libération, la couronne de volant de direction (33) étant fixée par rapport au moyeu de volant de direction (31) dans la position de fixation et la couronne de volant de direction (33) pouvant être inclinée par rapport au moyeu de volant de direction (31) dans la position de libération, un dispositif de génération de couple de rotation (6) étant agencé entre le moyeu de volant de direction (31) et la couronne de volant de direction (33), par lequel un couple de rotation peut être exercé autour de l'axe d'inclinaison (N) sur la couronne de volant de direction (33), comprenant les étapes suivantes consistant à :
- amener de manière motorisée le dispositif de fixation (5) dans la position de libération,
- exercer un couple de rotation par le dispositif de génération de couple de rotation (6) autour de l'axe d'inclinaison (N) sur la couronne de volant de direction (33), afin de redresser la couronne de volant de direction (33) par rapport au moyeu de volant de direction (31) autour de l'axe d'inclinaison (N),
- amener de manière motorisée le dispositif de fixation (5) dans la position de fixation.
